# EUROPEAN PATENT SPECIFICATION

(11) **EP 4 215 744 B1**
(45) Date of publication and mention of the grant of the patent: **23.07.2025**
(21) Application number: 22382035.8
(22) Date of filing: 20.01.2022
(51) Int. Cl.: F03D 13/20, E05B 63/24, F03D 80/50

(54) **DOOR ARRANGEMENT FOR A WIND TURBINE, DOOR LOCKING DEVICE AND WIND TURBINE**
TÜRANORDNUNG FÜR EINE WINDTURBINE, TÜRVERRIEGELUNGSVORRICHTUNG UND WINDTURBINE
AGENCEMENT DE PORTE POUR UNE ÉOLIENNE, DISPOSITIF DE VERROUILLAGE DE PORTE ET ÉOLIENNE

(43) Date of publication of application: 26.07.2023
(73) Proprietor: Siemens Gamesa Renewable Energy Innovation & Technology S.L., 31621 Sarriguren (Navarra) (ES)
(72) Inventor: Jacobs, Michael, Oviedo, FL, 32765 (US); Yu, Nan, Oviedo, FL, 32766 (US)
(74) Representative: SGRE-Association

(56) References cited:
- US-A- 2 461 426
- US-A- 2 533 396
- US-B2- 6 526 788

## Description

The present invention relates to a door arrangement for a wind turbine, comprising a door with an outer side and an inner side and a door locking device for locking and unlocking the closed door by coupling and decoupling the closed door with a stationary component of the door arrangement or the wind turbine.

Doors of wind turbines are provided to protect the interior of the wind turbine from disadvantageous weather conditions like humidity and/or extreme temperatures. Mostly, such doors are lockable to ensure that unauthorized persons cannot enter the wind turbine. However, persons who are currently in the interior of the wind turbine e.g. for maintenance work might have to leave the wind turbine. Particularly in case of a fire alarm or another threatening situation it is necessary that staff working within the wind turbine can leave the interior as quick as possible. This might be problematic if the door is currently locked. Another problem regarding lockable doors of wind turbines is that persons might be locked in the wind turbine accidentally.

Hence, it is an object of the present invention to provide an enhanced concept regarding lockable doors for wind turbines.

To solve this problem by means of the present invention, a door arrangement as initially described is characterized in that the door locking device comprises a central component, an attaching means and a connecting means, wherein the central component is attached to the stationary component by the attaching means and connectable and disconnectable with the door by the connecting means for locking and unlocking the door by a person being at the outer side, wherein the attaching means is manually releasable by a person being at the inner side for disconnecting the central component from the stationary component to unlock the door without tools. Similar door locking arrangements are known in the prior art, primarily from the field of refrigeration. Examples thereof are for instance US2461426A, US6526788B2 and US2533396A.

The present invention is based on the idea that the central component constitutes two mechanical connections, namely a first connection connecting the central component and the door and a second connection connecting the central component and the stationary component. Under normal conditions, the connection between the central component and the stationary component is closed. However, this connection can be opened by the person being at the inner side of the door or, in other words, within the interior of the wind turbine by hand without using any kind of tool to manually unlock the door and to be able to escape from the wind turbine in case of an emergency or in case the person has been accidentally locked in.

It is essential for the present invention that the attaching means can be manually released or opened by the person being at the inner side. The word "manually" means that the attaching means or the connection between the central component and the stationary component can be released or opened by hand only, i.e., by just using the fingers without any mechanical tools like screw drivers, wrenches, crowbars or the like.

The door can be or comprise a door plate. The door can consist of metal and/or wood and/or plastic or another suitable material. The door can be mounted at a tower of the wind turbine, particularly on the stationary component. Being in the closed position, i.e., being in the state covering an entrance hole of the wind turbine, the door is lockable. In the locked state and from the outer side, the door cannot be opened without a respective key or other entrance means for locking and unlocking the door.

Particularly, the door is a swing door which can be pivoted around a, particularly vertical, axis for bringing it from the open into the closed position and vice versa. In this embodiment, the door is held by hinges which are arranged on the door plate. Alternatively, the door can be a sliding door which is movable along a, particularly horizontal, axis. In this embodiment, the door can be held by and guided on at least one sliding rail, which can be attached to the stationary component.

The stationary component can be a, particularly rectangular, door frame which is fitted into the entrance opening of the tower of the wind turbine, particularly by means of concrete or other suitable filling materials. Alternatively, it is possible that the stationary component is not a separate element but a part of a wall or the tower of the wind turbine surrounding the door or the entrance opening, respectively.

The attaching means can comprise a handling section which the person being at the inner side can grasp by fingers for disconnecting the central component from the stationary component. Hence, the person being at the inner side is able to disconnect the central component and the stationary component just by releasing the attaching means with the help of the handling section. The handling section can be a clamp, a hand wheel, a lever, a knurled knob, a star knob or another manually manipulatable means. Hence, manually disconnecting the central component from the stationary component can be done by tilting the clamp or turning or rotating the hand wheel or lever or the like.

The central component can comprise a plate and a receiving element, wherein the receiving element is attached to the plate and the plate is attached to the stationary component by the attaching means, wherein the receiving element is adapted to receive the connecting means for connecting the central component with the door. The receiving element can be attached to the plate by screws, gluing, welding or the like. The plate and/or the receiving element can consist of metal, particularly of steel, or any other suitable material.

The attaching means can be a or can comprise at least one knob stud which extends through the plate and which is manually unscrewable from a threaded hole of the stationary component for disconnecting the central component from the stationary component to manually unlock the door by the person being at the inner side. The knob stud consists of a threaded bolt with a, particularly knurled and/or star-shaped, knob on the one end and which can be screwed into the threaded hole of the stationary component with its other end. Hence, the bolt comprises an external screw thread and the threaded hole comprises an internal screw thread which fit to each other. The plate comprises a hole which has the same diameter as or a larger diameter than the external screw thread of the bolt of the knob stud.

In a preferred embodiment, the attaching means is or comprises three knob studs extending through the plate and being manually unscrewable from a threaded hole of the stationary component each, wherein the three threaded holes are arranged triangularly to each other. Using three knob studs with three threaded holes means that the central component is attached to the stationary component at three points, wherein, if these points are arranged at the three corners of a triangle, no movement or clearance of the central component occurs, when the three knob studs are tightened carefully.

The material and the dimensions of the knob studs can be such that, when all three knob studs are hand-tightened, they collectively provide a clamping force, i.e., a force pressing the plate or central component, respectively, against the stationary component, which is between 5 and 30 kN, particularly 15 kN. This force is large enough to keep the central component in place during a normal operational state.

In an alternative embodiment, as well the central component as an attaching plate, which is attached to the stationary component, comprise a lug, wherein the attaching means is or comprises a pin which extends through the lugs and which can be manually pulled out from the lugs for disconnecting the central component from the stationary component to manually unlock the door by the person being at the inner side. For a better handling and to be able to easily remove the pin from the lugs, the pin can comprise a pin head which additionally can avoid that the pin falls down through the lugs. The longitudinal directions of bores of the lugs are in line which each other to allow the pin to be inserted into the lugs.

The connecting means can be or can comprise at least one threaded bolt which extends through the door and which is unscrewable from a threaded hole of the receiving element for disconnecting the central component from the door to unlock the door by the person being at the outer side. In contrast to the attaching means, the connecting means cannot be unscrewed manually but only with the help of a certain tool.

The receiving element can be a, particularly metallic, solid and block-like component comprising the threaded hole. The threaded bolt comprises an external screw thread and the threaded hole of the receiving element an internal screw thread which fit to each other. The door comprises a hole with a diameter which is equal to or larger than the outer diameter of the external screw thread of the threaded bolt.

Referring to the locked state of the door, a screw head of the threaded bolt can hold the door in position. The screw head can be located within a counterbore hole on the outer side of the door or within a supporting element which is attached to the outer side.

The threaded bolt can be unscrewable from and screwable into the threaded hole of the central component with a hex wrench or a wrench comprising a nut. The threaded bolt can be a security bolt which can be unscrewed with special tools only. Respective security systems of screwing connections which cannot be opened by common tools are known and provided by manufacturers like, e.g., McGard.

To achieve the object of the present invention, a door locking device for locking an unlocking a closed door with an outer side and an inner side by coupling and decoupling the door with a stationary component is provided, wherein the door locking device comprises a central component, an attaching means and a connecting means, wherein the attaching means is adapted to attach the central component to the stationary component, wherein the connecting means is adapted to connect and disconnect the central component with the door for locking and unlocking the door by a person being at the outer side, wherein the attaching means comprises a handling section which allows the attaching means to be manually released by a person being at the inner side for disconnecting the central component from the stationary component to unlock the door without tools. All advantages, features and aspects explained above with respect to the door arrangement according to the present invention also apply to the door locking device according to the present invention and vice versa.

The attaching means of the door locking device can comprise a handling section which the person being at the inner side can grasp by the fingers for disconnecting the central component from the stationary component, wherein the handling section is particularly a knurled knob or a star knob.

The object of the present invention is further achieved by a wind turbine, comprising at least one door arrangement according to the description above and/or at least one door locking device according to the preceding section of the description. All advantages, features and aspects which are explained with respect to the door arrangement according to the present invention and to the locking device according to the present invention also apply to the wind turbine according to the present invention and vice versa.

Preferably, the door arrangement constitutes an entrance door on the bottom of a tower of the wind turbine. The entrance door allows persons to enter the wind turbine from the outside. The tower of the wind turbine can be made of concrete and/or metal or other suitable materials.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a bottom section of a tower of an embodiment of a wind turbine according to the present invention,
- Fig. 2: a view on an outer side of a door of an embodiment of a door arrangement according to the present invention of the wind turbine of fig. 1,
- Fig. 3: a view on an inner side of the door of the door arrangement of the wind turbine of fig. 1,
- Fig. 4: a vertical cut through the door arrangement along the line IV-IV of fig. 3,
- Fig. 5: a horizontal cut through the door arrangement along the line V-V of fig. 3,
- **Fig.** 6: a view on an inner side of a door of another possible embodiment of a door arrangement of the wind turbine **of** **fig. 1****,** and
- **Fig.** 7: a close-up view of the central component and a bottom bracket of the door arrangement of **fig. 6****.**

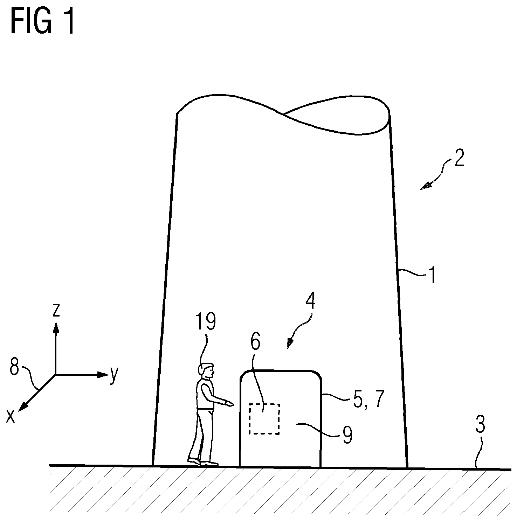

Fig. 1 shows a bottom section of a tower 1 of a wind turbine 2 according to the present invention, which is located on a ground 3. The tower 1 comprises an entrance door 4 which is realised by means of a door arrangement 5 according to the present invention with a locking device 6 according to the present invention.

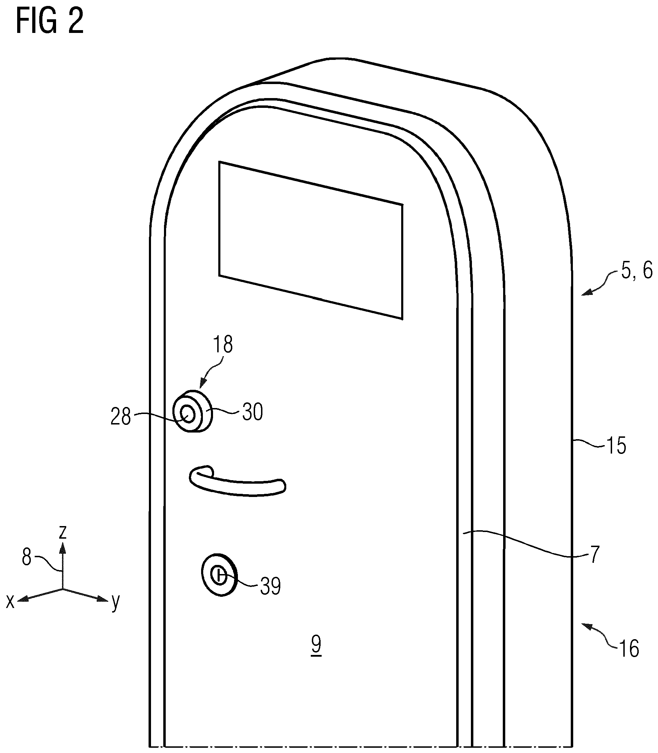

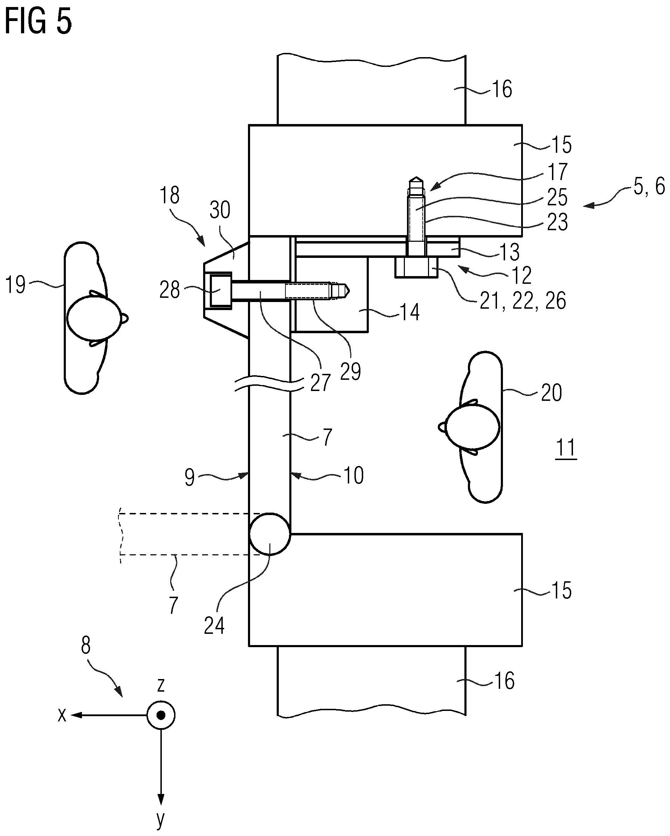

Details regarding a specific embodiment of the door arrangement 5 and the door locking device 6 are explained in reference to figs. 2 to 5. The door arrangement 5 comprises a plate-like door 7 which can be pivoted from an open into a closed position and vice versa by help of hinges 24 (see fig. 5). While all figures show the door 7 in the closed position, the dashed lines in fig. 5 indicate the door 7 in the open position. Regarding the closed position, the door 7 comprises an outer side 9 facing the environment and an inner side 10 facing an interior 11 of the wind turbine 2.

For a better orientation, all figures show a coordinate system 8, wherein the x-axis points perpendicular away from the closed door 7, the y-axis runs horizontally within the plane of the closed door and the z-axis points vertically upwards.

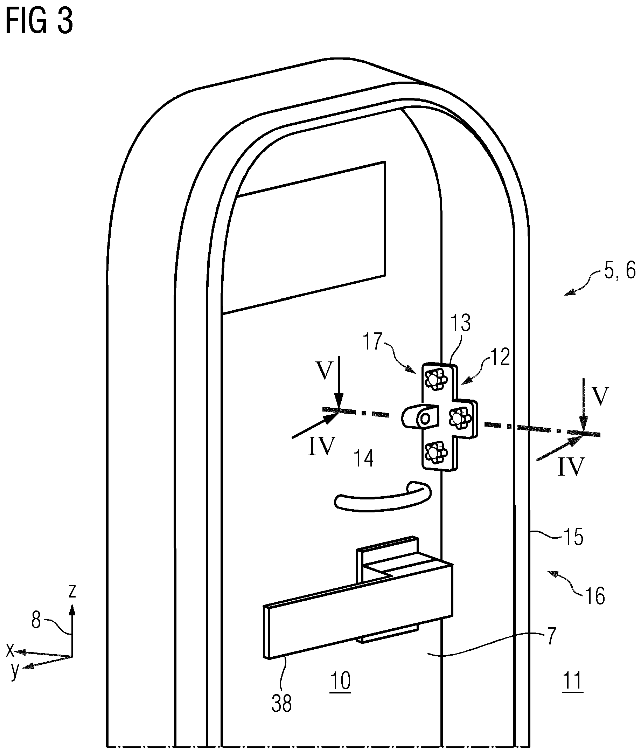

As can be seen particularly from figures 3 to 5, the door locking device 6 of the door arrangement 5 comprises a central component 12, which is used for locking and unlocking the closed door 7. The central component 12 comprises a metallic plate 13 and a metallic, block-like and solid receiving element 14 which is attached to the plate 13 by welding.

The central component 12 provides two releasable mechanical connections, namely a first connection connecting the central component 12 and the door 7 and a second connection connecting the central component 12 and a stationary component 15. The stationary component 15 is a door frame which fits into a respective opening of a concrete wall 16 of the tower 1. Alternatively, the stationary component 15 is the wall 16 itself.

Regarding the first connection, the central component 12 is connectable and disconnectable with the door 7 by the connecting means 18. In a normal operational state, connecting and disconnecting the first connection corresponds to locking and unlocking the door 7.

Regarding the second connection, the central component 12 is attached to the stationary component 15 of the door arrangement 5 by an attaching means 17. In the normal operational state, the second connection or the attaching means 17, respectively, is in a closed state. However, the attaching means 17 can also be released to unlock the door 7, particularly in emergency situations.

In the following, the aspects regarding the attaching means 17, the connecting means 18 and the functional principle of the one door locking device 6 are disclosed in detail. Assuming that the locking device 6 is in the normal operational state, i.e., that the central component 12 is connected with the stationary component 15 by the attaching means 17, a person 19 being at the outer side 9 of the door 7 (see figures 1 and 5) can lock the door 7 by connecting it with the central component 12 using the connecting means 18.

Independent from this, the attaching means 17 is manually releasable by a person 20 being at the inner side 10 of the door 7. Thus, the person 20 at the inner side 10 is able to open the connection between the central component 12 and the stationary component 15 just by hand. Regarding the manual opening of the attaching means 17, this component comprises a handling section 21 which the person 20 being at the inner side 10 can grasp by the fingers for disconnecting the central component 12 from the stationary component 15 to unlock the door 7 without tools.

Although the connecting means 18 can be opened just from the outer side 20, the attaching means 17 allows to manually unlock the door 7 from the inner side 10 or the interior 11 of the wind turbine 2. This is advantageous, particularly in the case of a fire alarm or if the person 20 has been accidentally locked into the wind turbine 2.

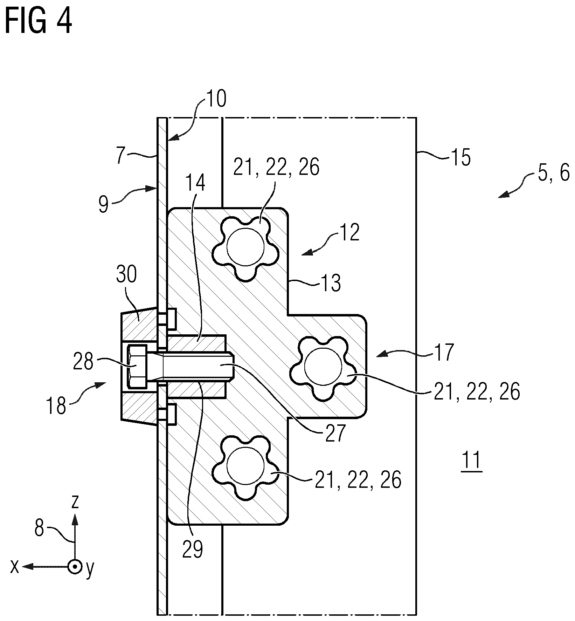

As shown in figures 4 and 5, the attaching means 17 comprises three knob studs 22 which extend through the plate 13 and which are manually unscrewable from a threaded hole 23 of the stationary component 15 each. Each of the knob studs 22 comprises a threaded bolt 25 with an external screw thread which fits an internal screw thread of the threaded hole 23 of the stationary component 15. The plate 13 comprises a hole, wherein the bolt 25 runs through this hole. The knob stud 22 furthermore comprises a, particularly knurled, star knob 26, which constitutes the handling section 21. The threaded holes 23 are arranged triangularly to each other at the stationary component 15 (see fig. 4). If all three knob studs 22 are tightened by hand properly, they provide a clamping force of approximately 15 kN which presses the plate 13 towards the stationary component 15.

Referring particularly to figures 4 and 5, the connecting means 18 is a threaded bolt 27 with a screw head 28. The threaded bolt 27 extends through the door 7 and, if the door 7 is locked, screwed into a threaded hole 29 of the receiving element 14. The threaded bolt 27 comprises an external screw thread and the threaded hole 29 an internal screw thread which fit to each other. Referring to the locked state of the door 7 again, the screw head 28 holds the door 7 in position and is located within a counterbore hole of a conical supporting element 30 which is attached on the outer side 9 of the door 7. The threaded bolt 27 is screwed into the threaded hole 29 of the receiving element 14.

The person 19 being at the outer side 9 of the door 7 can lock/unlock the door 7 by screwing/unscrewing the threaded bolt 27 into the threaded hole 29 by a tool. The tool can be a hex-wrench which can be inserted into a respective hex hole of the screw head 28. Preferably, the tool comprises a special nut, which only fits to the respective screw head 28 to provide a security system. In this security system, the door 7 can be unlocked by the respective special tool or nut only.

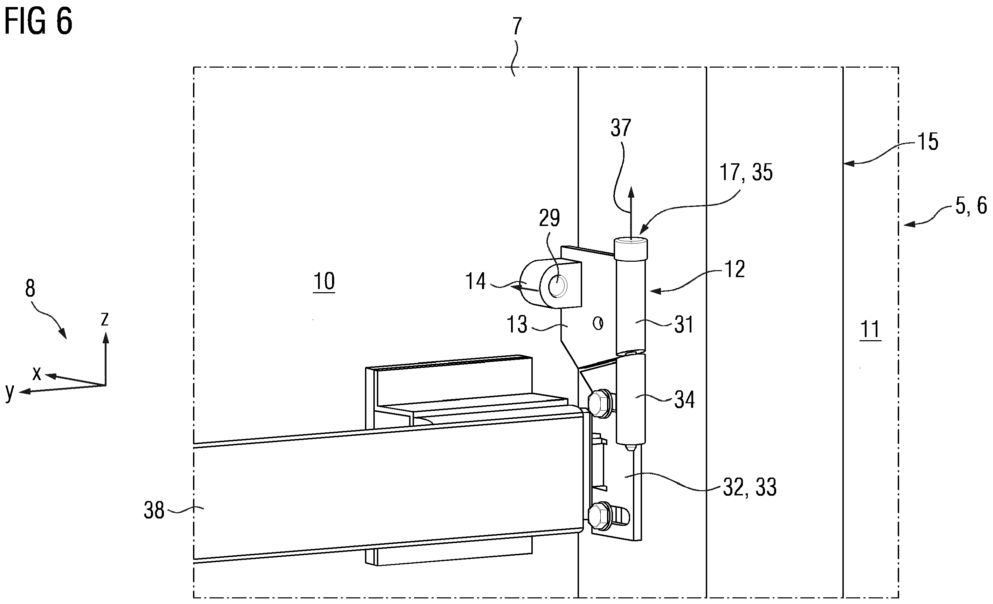

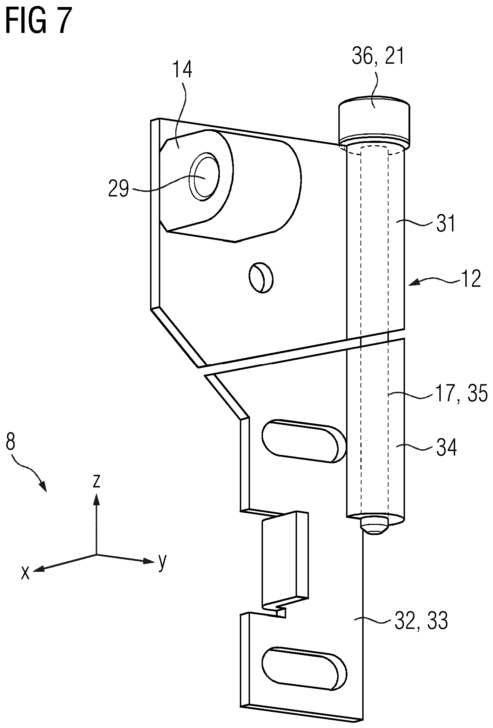

Figs. 6 and 7 show another possible embodiment of the door locking device 6. In this embodiment, the same connecting means 18 as in the embodiment shown in figures 2 to 5 is provided. The central component 12 comprises the plate 13, the receiving element 14 and, in contrast to the previous embodiment, a cylindrical lug 31. An attaching plate 32 is attached to the stationary component 15. Particularly, the attaching plate 32 comprises a plate 33 for screwing the attaching plate 32 on the stationary component 15. The attaching plate 32 furthermore comprises a cylindrical lug 34, wherein borings through the lugs 31, 34 are arranged coaxially.

The attaching means 17 is a pin 35 which extends through the lugs 31, 34. The pin 35 comprises a pin head 36 to avoid that the pin 35 falls through the lugs 31, 34. The attaching means 12 or the pin 35, respectively, can be released by the person 20 being at the inner side 10 to unlock the door 7 without tools just by pulling the pin 35 out of the lugs 31, 34 with the hand, which is indicated by the arrow 37 in fig. 6. Hence, in this embodiment, the pin head 36 constitutes the handling portion 21.

In both embodiments and independently from the door locking device 6, the door 7 comprises an automatically closing latch-notch-connection to bring the door 7 into a closed but unlocked state. To open this connection from the inner side 10, a door handle 38 is provided. On the outer side 9 a key hole 39 is provided. The latch-notch-connection can be opened from the outer side 9 by a respective key.

Although the present invention has been described in detail with reference to the preferred embodiment, the present invention is not limited by the disclosed examples from which the skilled person is able to derive other variations without departing from the scope of the invention.

## Claims

1. Door arrangement for a wind turbine (2), constituting an entrance door (4) of the wind turbine (2) and comprising a door (7) with an outer side (9) and an inner side (10) and a door locking device (6) for locking and unlocking the closed door (7) by coupling and decoupling the closed door (7) with a stationary component (15) of the door arrangement (5) of the wind turbine (2), wherein the door locking device (6) comprises a central component (12), an attaching means (17) and a connecting means (18), wherein the central component (12) is attached to the stationary component (15) by the attaching means (17) and connectable and disconnectable with the door (7) by the connecting means (18) for locking and unlocking the door (7) by a person (19) being at the outer side (9), wherein the attaching means (17) is manually releasable by a person (20) being at the inner side (10) for disconnecting the central component (12) from the stationary component (15) to unlock the door (7) without tools.

2. Door arrangement according to claim 1, **characterized in that** the attaching means (17) comprises a handling section (21) which the person (20) being at the inner side (10) can grasp by the fingers for disconnecting the central component (12) from the stationary component (15), wherein the handling section (21) is particularly a knurled knob or a star knob (26).

3. Door arrangement according to claim 1 or 2, **characterized in that** the central component (12) comprises a plate (13) and a receiving element (14), wherein the receiving element (14) is attached to the plate (13) and the plate (13) is attached to the stationary component (15) by the attaching means (17), wherein the receiving element (14) is adapted to receive the connecting means (18) for connecting the central component (12) with the door (7).

4. Door arrangement according to claim 3, **characterized in that** the attaching means (17) is a or comprises at least one knob stud (22) which extends through the plate (13) and which is manually unscrewable from a threaded hole (23) of the stationary component (15) for disconnecting the central component (12) from the stationary component (15) to manually unlock the door by the person (20) being at the inner side (10).

5. Door arrangement according to claim 4, **characterized in that** the attaching means (17) is or comprises three knob studs (22) extending through the plate (13) and being manually unscrewable from a threaded hole (23) of the stationary component (15) each, wherein the three threaded holes (23) are arranged triangularly to each other.

6. Door arrangement according to claim 3, **characterized in that** the central component (12) and an attaching plate (32), which is attached to the stationary component (15), comprise a lug (31, 34) each, wherein the attaching means (17) is or comprises a pin (35) which runs through the lugs (31, 34) and which can be pulled out from the lugs (31, 34) manually for disconnecting the central component (12) from the stationary component (15) to manually unlock the door by the person (20) being at the inner side (10).

7. Door arrangement according to one of the claims 3 to 6, **characterized in that** the connecting means (18) is a or comprises at least one threaded bolt (27) which extends through the door (7) and which is unscrewable from a threaded hole (29) of the receiving element (14) for disconnecting the central component (12) from the door (7) to unlock the door (7) by the person (19) being at the outer side (9).

8. Door arrangement according to claim 7, **characterized in that** the threaded bolt (27) is unscrewable from the threaded hole (29) of the central component (12) with a hex wrench or a wrench comprising a nut.

9. Door arrangement according to one of the preceding claims, **characterized in that** the stationary component (15) is a door frame.

10. Wind turbine, comprising at least one door arrangement (5) according to one of the preceding claims .

11. Wind turbine according to claim 10, **characterized in that** the door arrangement (5) constitutes an entrance door (4) on the bottom of a tower (1) of the wind turbine (2).

## Patentansprüche

1. Türanordnung für eine Windkraftanlage (2), die eine Zugangstür (4) der Windkraftanlage (2) darstellt und eine Tür (7) mit einer Außenseite (9) und einer Innenseite (10) und eine Türverriegelungsvorrichtung (6) zum Verriegeln und Entriegeln der geschlossenen Tür (7) durch Koppeln und Entkoppeln der geschlossenen Tür (7) mit einer stationären Komponente (15) der Türanordnung (5) der Windkraftanlage (2) umfasst, wobei die Türverriegelungsvorrichtung (6) eine mittige Komponente (12), eine Befestigungseinrichtung (17) und eine Verbindungseinrichtung (18) umfasst, wobei die mittige Komponente (12) mittels der Befestigungseinrichtung (17) an der stationären Komponente (15) befestigt ist und mittels der Verbindungseinrichtung (18) mit der Tür (7) verbindbar und davon trennbar ist, um die Tür (7) durch eine Person (19), die sich auf der Außenseite (9) befindet, zu verriegeln und zu entriegeln, wobei die Befestigungseinrichtung (17) von einer Person (20), die sich auf der Innenseite (10) befindet, manuell lösbar ist, um die mittige Komponente (12) von der stationären Komponente (15) zu trennen, um die Tür (7) ohne Werkzeug zu entriegeln.

2. Türanordnung nach Anspruch 1, **dadurch gekennzeichnet, dass** die Befestigungseinrichtung (17) einen Handhabungsabschnitt (21) umfasst, den die Person (20), die sich auf der Innenseite (10) befindet, mit der Hand greifen kann, um die mittige Komponente (12) von der stationären Komponente (15) zu trennen, wobei der Handhabungsabschnitt (21) insbesondere ein Rändelknopf oder ein Sterngriff (26) ist.

3. Türanordnung nach Anspruch 1 oder 2, **dadurch gekennzeichnet, dass** die mittige Komponente (12) eine Platte (13) und ein Aufnahmeelement (14) umfasst, wobei das Aufnahmeelement (14) an der Platte (13) befestigt ist und die Platte (13) mittels der Befestigungseinrichtung (17) an der stationären Komponente (15) befestigt ist, wobei das Aufnahmeelement (14) dazu eingerichtet ist, die Verbindungseinrichtung (18) zum Verbinden der mittigen Komponente (12) mit der Tür (7) aufzunehmen.

4. Türanordnung nach Anspruch 3, **dadurch gekennzeichnet, dass** die Befestigungseinrichtung (17) mindestens ein Knaufschaft (22) ist oder einen solchen umfasst, der sich durch die Platte (13) erstreckt und manuell aus einer Gewindebohrung (23) der stationären Komponente (15) herausschraubbar ist, um die mittige Komponente (12) von der stationären Komponente (15) zu trennen, um die Tür durch die Person (20), die sich auf der Innenseite (10) befindet, manuell zu entriegeln.

5. Türanordnung nach Anspruch 4, **dadurch gekennzeichnet, dass** die Befestigungseinrichtung (17) drei Knaufschäfte (22) umfasst, die sich durch die Platte (13) erstrecken und jeweils manuell aus einer Gewindebohrung (23) der stationären Komponente (15) herausschraubbar sind, wobei die drei Gewindebohrungen (23) dreieckig zueinander angeordnet sind.

6. Türanordnung nach Anspruch 3, **dadurch gekennzeichnet, dass** die mittige Komponente (12) und eine Befestigungsplatte (32), die an der stationären Komponente (15) befestigt ist, jeweils eine Muffe (31, 34) umfassen, wobei die Befestigungseinrichtung (17) ein Stift (35) ist oder einen solchen umfasst, der durch die Muffen (31, 34) verläuft und aus den Muffen (31, 34) manuell herausziehbar ist, um die mittige Komponente (12) von der stationären Komponente (15) zu trennen, um die Tür durch die Person (20), die sich auf der Innenseite (10) befindet, manuell zu entriegeln.

7. Türanordnung nach einem der Ansprüche 3 bis 6, **dadurch gekennzeichnet, dass** die Verbindungseinrichtung (18) mindestens ein Gewindebolzen (27) ist oder einen solchen umfasst, der sich durch die Tür (7) erstreckt und aus einer Gewindebohrung (29) des Aufnahmeelements (14) herausschraubbar ist, um die mittige Komponente (12) von der Tür (7) zu trennen, um die Tür (7) durch die Person (19), die sich auf der Außenseite (9) befindet, zu entriegeln.

8. Türanordnung nach Anspruch 7, **dadurch gekennzeichnet, dass** der Gewindebolzen (27) mit einem Innensechskantschlüssel oder einem Schraubenschlüssel aus der Gewindebohrung (29) der mittigen Komponente (12) herausschraubbar ist.

9. Türanordnung nach einem der vorstehenden Ansprüche, **dadurch gekennzeichnet, dass** die stationäre Komponente (15) ein Türrahmen ist.

10. Windkraftanlage, umfassend mindestens eine Türanordnung (5) nach einem der vorstehenden Ansprüche.

11. Windkraftanlage nach Anspruch 10, **dadurch gekennzeichnet, dass** die Türanordnung (5) eine Zugangstür (4) am Boden eines Turms (1) der Windkraftanlage (2) darstellt.

## Revendications

1. Agencement de porte pour une éolienne (2), constituant une porte d'entrée (4) de l'éolienne (2) et comprenant une porte (7) qui comporte un côté externe (9) et un côté interne (10) ainsi qu'un dispositif de verrouillage de porte (6) pour verrouiller et déverrouiller la porte fermée (7) au moyen du couplage et du découplage de la porte fermée (7) par rapport à un composant stationnaire (15) de l'agencement de porte (5) de l'éolienne (2), dans lequel le dispositif de verrouillage de porte (6) comprend un composant central (12), un moyen de liaison (17) et un moyen de connexion (18), dans lequel le composant central (12) est lié au composant stationnaire (15) par le moyen de liaison (17) et peut être connecté et déconnecté par rapport à la porte (7) par le moyen de connexion (18) pour le verrouillage et le déverrouillage de la porte (7) par une personne (19) qui est au niveau du côté externe (9), et dans lequel le moyen de liaison (17) peut être libéré manuellement par une personne (20) qui est au niveau du côté interne (10) pour déconnecter le composant central (12) par rapport au composant stationnaire (15) afin de déverrouiller la porte (7) sans outils.

2. Agencement de porte selon la revendication **1, caractérisé en ce que** le moyen de liaison (17) comprend une section de manipulation (21) que la personne (20) qui est au niveau du côté interne (10) peut saisir à l'aide de ses doigts pour déconnecter le composant central (12) par rapport au composant stationnaire (15), dans lequel la section de manipulation (21) est en particulier un bouton à molette ou un bouton en forme d'étoile (26).

3. Agencement de porte selon la revendication 1 ou 2, **caractérisé en ce que** le composant central (12) comprend une plaque (13) et un élément de réception (14), dans lequel l'élément de réception (14) est lié à la plaque (13) et la plaque (13) est liée au composant stationnaire (15) par le moyen de liaison (17), et dans lequel l'élément de réception (14) est adapté pour recevoir le moyen de connexion (18) pour connecter le composant central (12) avec la porte (7).

4. Agencement de porte selon la revendication 3, **caractérisé en ce que** le moyen de liaison (17) est ou comprend au moins un tourillon de bouton (22) qui est étendu au travers de la plaque (13) et qui peut être dévissé manuellement par rapport à un trou taraudé (23) du composant stationnaire (15) pour déconnecter le composant central (12) par rapport au composant stationnaire (15) afin que la personne (20) qui est au niveau du côté interne (10) déverrouille manuellement la porte.

5. Agencement de porte selon la revendication 4, **caractérisé en ce que** le moyen de liaison (17) est ou comprend trois tourillons de bouton (22) qui sont étendus au travers de la plaque (13) et qui peuvent chacun être dévissés manuellement par rapport à un trou taraudé (23) du composant stationnaire (15), dans lequel les trois trous taraudés (23) sont agencés en triangle les uns par rapport aux autres.

6. Agencement de porte selon la revendication 3, **caractérisé en ce que** le composant central (12) et une plaque de liaison (32), qui est liée au composant stationnaire (15), comprennent chacun une languette (31, 34), dans lequel le moyen de liaison (17) est ou comprend un axe (35) qui court au travers des languettes (31, 34) et qui peut être extrait manuellement par traction hors des languettes (31, 34) pour déconnecter le composant central (12) par rapport au composant stationnaire (15) afin que la personne (20) qui est au niveau du côté interne (10) déverrouille manuellement la porte.

7. Agencement de porte selon l'une quelconque des revendications 3 à 6, **caractérisé en ce que** le moyen de connexion (18) est ou comprend au moins un boulon fileté (27) qui est étendu au travers de la porte (7) et qui peut être dévissé par rapport à un trou taraudé (29) de l'élément de réception (14) pour déconnecter le composant central (12) par rapport à la porte (7) afin que la personne (19) qui est au niveau du côté externe (9) déverrouille la porte (7).

8. Agencement de porte selon la revendication 7, **caractérisé en ce que** le boulon fileté (27) peut être dévissé par rapport au trou taraudé (29) du composant central (12) à l'aide d'une clé hexagonale ou d'une clé comprenant un écrou.

9. Agencement de porte selon l'une quelconque des revendications précédentes, **caractérisé en ce que** le composant stationnaire (15) est un châssis de porte.

10. Éolienne, comprenant au moins un agencement de porte (5) selon l'une quelconque des revendications précédentes.

11. Éolienne selon la revendication 10, **caractérisée en ce que** l'agencement de porte (5) constitue une porte d'entrée (4) au niveau de la partie basse d'une tour (1) de l'éolienne (2).
